# EUROPÄISCHE PATENTSCHRIFT

(11) **EP 4 039 595 B1**
(45) Veröffentlichungstag und Bekanntmachung des Hinweises auf die Patenterteilung: **24.07.2024**
(21) Anmeldenummer: 21156064.4
(22) Anmeldetag: 09.02.2021
(51) Int. Cl.: B64D 11/00, E05B 41/00

(54) **SPERRVORRICHTUNG UND SCHLIESSEINHEIT FÜR EINE KLAPPE**
LOCKING DEVICE AND CLOSURE UNIT FOR A FLAP
DISPOSITIF DE VERROUILLAGE ET UNITÉ DE FERMETURE POUR UN VOLET

(43) Veröffentlichungstag der Anmeldung: 10.08.2022
(73) Patentinhaber: SFS Group International AG, 9435 Heerbrugg (CH)
(72) Erfinder: Bähr, Dominik, 72119 Ammerbuch (DE)

(56) Entgegenhaltungen:
- EP-A1- 1 197 621
- US-A1- 2003 146 629

## Beschreibung

Die vorliegende Erfindung befasst sich mit einer Sperrvorrichtung, d.h. einem Schliesselement für eine Klappe. Eine oder mehrere solche Sperrvorrichtungen können zu einer Schliesseinheit kombiniert werden. Die hier beschriebene Sperrvorrichtung und Schliesseinheit sind für die Handbetätigung vorgesehen. Die Hauptanwendung sind Gepäckfächer in Flugzeugen, die im Überkopf-Bereich über den Sitzen vorgesehen sind.

### TECHNISCHER HINTERGRUND

Gepäckfächer in Flugzeugen sind vermutlich die von einem Passagier meistbeanspruchte Komponente eines Flugzeugs. Sie müssen daher sowohl in der Bedienung einfach als auch sicher sein, um ein Herausfallen von Gepäck in ungünstigen Flugsituationen sicher zu verhindern. Dazu ist es entscheidend, dass die Klappen, die die Gepäckfächer verschliessen, auch tatsächlich verschlossen und nicht nur teilweise eingerastet sind und sich im Flug unbeabsichtigt öffnen. Um dem Flugpersonal die Kontrolle des korrekten Verschlusses zu erleichtern, ist es wünschenswert, ein optisch auffallendes, manipulationssicheres Element an jeder Schliesseinheit zu haben, also einen Indikator für den korrekten, verschlossenen Zustand.

### STAND DER TECHNIK

Es ist eine Vielzahl von gängigen Lösungen mit Rast-, Schnapp- und Bolzenverschlüssen bekannt. Die meisten sind mechanisch relativ komplex, erfordern eine sorgfältige Justage vor Ort und erlauben - wenn überhaupt - nur mit zusätzlichen Mitteln eine Anzeige des Zustandes "korrekt verschlossen". Es ist Aufgabe der vorliegenden Erfindung, eine einfache, kompakte und mechanisch unaufwändige Lösung für die oben beschriebenen Probleme vorzuschlagen.

Die Schrift EP 1 197 621 A1 beschreibt eine lösbare mechanische Verriegelungsanordnung für ein Gepäckfach mit einem schwenkbaren Handgriff. Der Handgriff verfügt über einen Schwenkarm mit einem Mitnehmer für einen Verriegelungshaken.

Das Dokument US 2003/146629 A1 zeigt eine Verriegelung für Gepäckfach in einem Flugzeug. Eine schwenkbare Griffmulde betätigt auch hier einen Verriegelungshaken.

### BESCHREIBUNG DER ERFINDUNG

Die oben beschriebene Aufgabe der Erfindung wird durch die Merkmale des unabhängigen Anspruchs 1 gelöst.

Mit dem Begriff Sperrvorrichtung wird im Folgenden die kleinste Kombination von technischen Merkmalen beschrieben, die, wenn an einer Klappe oder Türe angebracht, ein sicheres Öffnen und Schliessen im obigen Sinne bewirken kann. Eine Schliesseinheit ist eine Baugruppe, die mindestens zwei Sperrvorrichtungen beinhaltet, die aber gemeinsam betätigt werden. Dabei können einzelne technische Merkmale zusammengefasst sein. So lässt sich das erfinderische Prinzip mit einem Handgriff und einer Sperrvorrichtung realisieren, hier spezifisch einer Klinke mit Haken. Es lassen sich jedoch auch zwei Klinken / Haken mit einem Handgriff betätigen, ohne die erfinderische Grundidee zu verlassen.

Eine erfindungsgemässe Sperrvorrichtung für eine Klappe bzw. eine Türe umfasst im Grundsatz drei technische Elemente: eine im Wesentlichen flächige Tragstruktur, ein Griffelement zum Entriegeln der Sperrvorrichtung; sowie eine Klinke mit einem Haken.

Die Tragstruktur stellt dabei eine Art Montagerahmen der an oder mit der Klappe bzw. Türe (auch in einer Aussparung derselben) kraftschlüssig verbunden werden kann. Die Tragstruktur kann Aussteifungen, Rippen wie auch dekorative Elemente enthalten, soweit der geplante Einsatz dies erfordert. In der Tragstruktur sind als wesentliche technische Merkmale integriert: ein Drehlager für einen Rotationsbolzen sowie mindestens eine zylinderförmige geradführende Gleitlagerbuchse.

Das Griffelement wiederum weist eine Griffmulde (als Eingriffsmöglichkeit für einen Bediener) und mindestens einen Gleitlagerbolzen auf. Letztere ist so dimensioniert, dass er in die vorerwähnte Gleitlagerbuchse beweglich geführt werden kann. Ferner ist im Griffelement eine Aufnahme für einen ortsfest im Griffelement angeordneten, rechtwinklig zum Gleitlagerbolzen ausgerichteten Aktivierungsbolzen vorgesehen.

Eine Klinke stellt nach üblicher Definition ein Maschinenteil dar, das über einen einarmigen, um einen Zapfen drehbar gelagerten kurzen Hebel verfügt, der dann dazu dient, ein anderes Maschinenteil in seiner Bewegung zu hemmen. Im vorliegenden Fall weist die Klinke einen Haken auf, ein Lager für den Rotationsbolzen und eine als Langloch oder Nut ausgeführte Kulisse zur Führung des Aktivierungsbolzens.

Diese drei technischen Elemente werden vormontiert, wobei Tragstruktur und Griffelement so miteinander verbunden werden, dass der Gleitlagerbolzen des Griffelements (und damit auch das Griffelement selbst) in der Gleitlagerbuchse der Tragstruktur längsverschieblich (zwangs-)geführt wird. Die Klinke ist im Drehlager der Tragstruktur um den Rotationsbolzen drehbar gelagert und erlaubt der Klinke eine Bewegung zwischen einer Position "verriegelt" und "offen". Dabei befindet sich der Aktivierungsbolzen sich im Eingriff mit der Kulisse.

Zusammengefasst sind die drei technischen Elemente Tragstruktur, Griffelement und Klinke über (a) die Gleitlagerung von Griffelement und Tragstruktur, sowie über (b) den Rotationsbolzen und (c) den Aktivierungsbolzen miteinander verbunden. Während der Rotationsbolzen das Hebelende der Klinke in der Tragstruktur fest hält, wird die Klinke durch das Griffelement über die Kulisse geführt. Durch die als Langloch ausgeführte Kulisse wird dabei keine durch einen Formschluss erzwungene, instantane Mitbewegung erzwungen. Vielmehr erfolgt die Führung des Griffelements beim Öffnen (und Schliessen) durch die Kombination Gleitlagerbolzen / Gleitlagerbuchse geradlinig und diese Gerad-Bewegung wird durch den mitbewegten Aktivierungsbolzen über die Kulisse in eine Drehbewegung der Klinke übersetzt wird, welche die Entriegelung der Sperrvorrichtung bewirkt. Der Weg, den der Aktivierungsbolzen in der Kulisse dabei zurücklegen kann, bewirkt ein Spiel bzw. einen Zeitversatz zwischen Beginn der Öffnungsbewegung (= Ziehen des Handgriffs) und dem Einsetzen des eigentlichen Entriegelns.

Die Sperrvorrichtung kann durch eine Schenkelfeder am Drehlager ergänzt werden, welche die Klinke in Richtung der Position drückt.

In einer Weiterbildung der Erfindung kann am Griffelement ein Indikator angebracht sein, der sichtbar ist, wenn die Sperrvorrichtung sich in der einer "Offen" Position befindet und nur verdeckt wird, wenn die Sperrvorrichtung sich in der einer "Geschlossen" Position befindet. In seiner Funktion als Sicherungselement bleibt der Indikator bei Fehlbetätigung der Klinke somit zwangsläufig sichtbar. Der Indikator kann als eine vorspringende flache Zunge oder als Farbmarkierung am Handgriff vorgesehen werden.

Die beschriebene Sperrvorrichtung kann weiterhin so ausgeführt werden, dass die Kulisse eine erste und eine zweite Endposition besitzt und der Aktivierungsbolzen zwischen der ersten und zweiten Endposition beweglich ist und der Öffnungsvorgang erst durch das kraftschlüssige Anliegen in der ersten Endposition eingeleitet wird. Auf diese Weise wird das oben beschriebene Spiel bzw. der Zeitversatz erreicht.

Die Sperrvorrichtung kann so ausgelegt sein, dass beim Schliessvorgang der Haken in einen Gegenhalter einrastet und dadurch über die Kulisse der Aktivierungsbolzen von einer nicht definierten Position in der Kulisse an die erste Endposition gezogen wird und das Griffelement in eine definierte Endposition überführt wird. Der Gegenhalter wird so ausgelegt, dass er die in die entsprechenden Aussparungen des Hakens eingreifen kann

Wie oben erwähnt können zwei Sperrvorrichtungen zu einer Schliesseinheit kombiniert werden, wobei die beiden Griffelemente um eine gemeinsame Griffmulde angeordnet sind und eine gemeinsame Tragstruktur für beiden Sperrvorrichtungen realisiert wird.

Der Betätigungsvorgang für die erfinderische Sperrvorrichtung bzw. Schliesseinheit kann als Verfahren zum Öffnen einer geschlossenen Klappe beschrieben werden, mit folgenden Schritten:
- Das Betätigen des Griffelementes durch Ziehen an der Griffmulde.
- Dadurch wird die Klinke betätigt und der Haken gibt seinen Gegenhalter frei. Die Sperrvorrichtung bzw. die Schliesseinheit ist entriegelt, die Klappe kann geöffnet werden.
- Der Aktivierungsbolzen kann auf einer undefinierten Position in der Kulisse verbleiben, wobei jedoch der Indikator für die Position "Offen" sichtbar ist. Dies wird erreicht, weil der Indikator nur in der definierten Endposition "Geschlossen" nicht mehr auf eine mögliche Fehlbetätigung aufmerksam macht.

### KURZBESCHREIBUNG DER FIGUREN

Figur 1 zeigt eine Schliesseinheit mit 2 Sperrvorrichtungen.
Figur 2 zeigt dieselbe Schliesseinheit ohne die Tragstruktur.
Figur 3 zeigt einen Schnitt durch die Darstellung der Figur 3 etwa entlang der Linie aus Figur 2, in Seitenansicht auf die Klinke.
Figur 4 zeigt eine Schrägansicht auf ein Griffelement
Figur 5 zeigt eine Klinke mit Haken und zwei Bolzen
Figur 6 zeigt eine Kombination aus Figur 4 und 5
Figur 7 zeigt die Orientierung verschiedener Verbindungselemente zwischen Tragstruktur und Griffelement
Figur 8 zeigt die Tragstruktur und Griffelement aus anderer Perspektive.

### DETAILLERTE FIGURENBESCHREIBUNG

In einigen Figuren werden Merkmale mit einem Hochstrich ' beim Referenzzeichen gekennzeichnet. Funktionell und strukturell entsprechen diese dem Merkmal ohne Hochstrich und werden daher nicht jedes Mal separat erläutert.

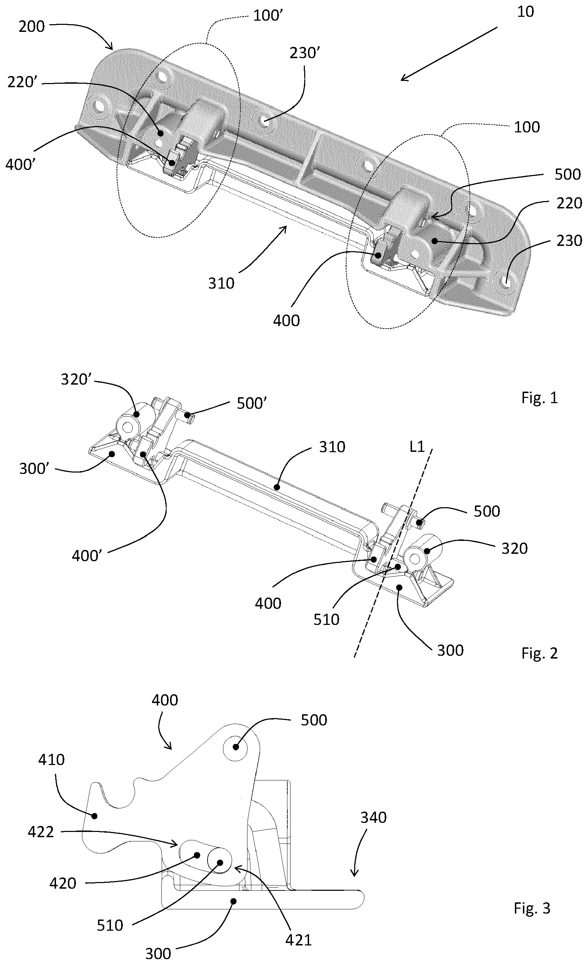

Figur 1 zeigt eine Schliesseinheit 10 gemäss vorliegender Erfindung mit zwei Sperrvorrichtungen 100, 100' (gestrichelte Ovale), die von einer gemeinsamen Tragstruktur 200 gehalten werden. Das Griffelement 300 ist in Figur 1 etwas verdeckt; bezeichnet ist die gemeinsame Griffmulde 310, die mittig zwischen den Sperrvorrichtungen 100,100' angeordnet ist. An der Tragstruktur 200 sind mehrere Befestigungslöcher 230, 230' gezeigt, mit deren Hilfe die Tragstruktur an einer Klappe verschraubt oder vernietet werden kann. Die Darstellung der vormontierten (einbaufertigen) Schliesseinheit ist hier "von hinten", das heisst von der dem Benutzer abgewandten Seite. Die räumlich sehr kompakte Sperrvorrichtung (100 bzw. 100') zeigt hier die Gleitlagerbuchse 220, der darin geführte Gleitlagerbolzen 320 ist nicht sichtbar. Die Klinke 400 ist mittels des Rotationsbolzens 500 in der Tragstruktur 200 gelagert.

Figur 2 zeigt die Anordnung aus Figur 1 ohne die Tragstruktur 200. Als Hauptkomponenten sind somit das Griffelement 300 und die Klinke 400 mit ihren jeweiligen, verbauten Bestandteilen im Bild. Der in Figur 1 unsichtbare Gleitlagerbolzen 320, der für die erzwungene Geradführung im Zusammenspiel mit der Gleitlagerbuchse 220 sorgt, ist deutlich erkennbar. Er ist als angeformtes Bauteil über einen Steg mit dem Griffelement 300 verbunden. Seitlich daneben (im Bild links vom Griffelement 300, rechts vom Griffelement 300') ist die Klinke 400 gezeigt. Die Verbindung zwischen Klinke 400 und Griffelement 300 erfolgt über den Aktivierungsbolzen 510 (etwas verdeckt). Der Rotationsbolzen 500 markiert die Schwenkachse, um die die Klinke sich beim Öffnungs- und Schliessvorgang beweglich ist.

Figur 3 ist ein Querschnitt durch die Konfiguration gezeigt in Figur 2, etwa entlang der als L1 bezeichneten Linie. Gezeigt ist die Klinke 400 mit ihrem Haken 410 vor dem Hintergrund des Griffelementes 300. Deutlich erkennbar ist die Kulisse 420, die den Aktivierungsbolzen 510 führt. Die Kulisse weist zwei End(anschlags-)positionen 421, 422 auf für den Aktivierungsbolzen 510. Je nach Betätigungszustand der Sperrvorrichtung kann der Aktivierungsbolzen 510 sich in der Kulisse bewegen und auch verbleiben. Im Bild sichtbar ist auch der Indikator 340, der hier als Vorsprung oder Lippe ausgebildet ist und - je nach - Lage vor die Aussenfläche der Tragstruktur 200 bzw. der Klappe herausragen kann und somit die anzeigt, dass die Klappe nicht sicher geschlossen ist.

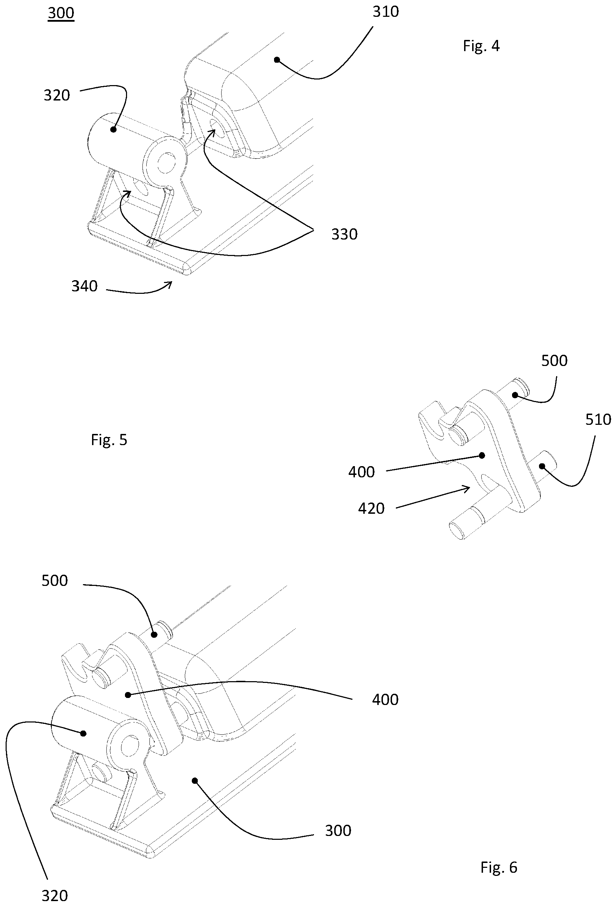

Die Figuren 4, 5 und 6 werden im Zusammenhang erläutert. Figur 6 zeigt grundsätzlich eine Sperrvorrichtung 100 ohne Tragstruktur 200, also analog zu Figur 2, nur aus anderer Perspektive. Figur 4 zeigt dabei das Griffelement 300 allein, Figur 5 die Klinke 400 mit Kulisse 420 und den beiden Elementen Aktivierungsbolzen 510 und Rotationsbolzen 500.

Figur 4 zeigt den Gleitlagerbolzen 320 und die Griffmulde 310. Der Zwischenraum ist für die Klinke 400 vorgesehen, die Aufnahmen 330 sind für den Aktivierungsbolzen 510 vorgesehen. Der Vorsprung der Griffelements 300 dient als Indikator 340.

Figur 6 zeigt den verbundenen Zustand aus Klinke 400 und Griffelement 300. Die Klinke 400 ist via Aktivierungsbolzen 510 und die Kulisse 420 (verdeckt) mit dem Griffelement verbunden. Rotationsbolzen 500 ist gezeigt, er wäre in der hier nicht gezeigten Tragstruktur 200 gelagert.

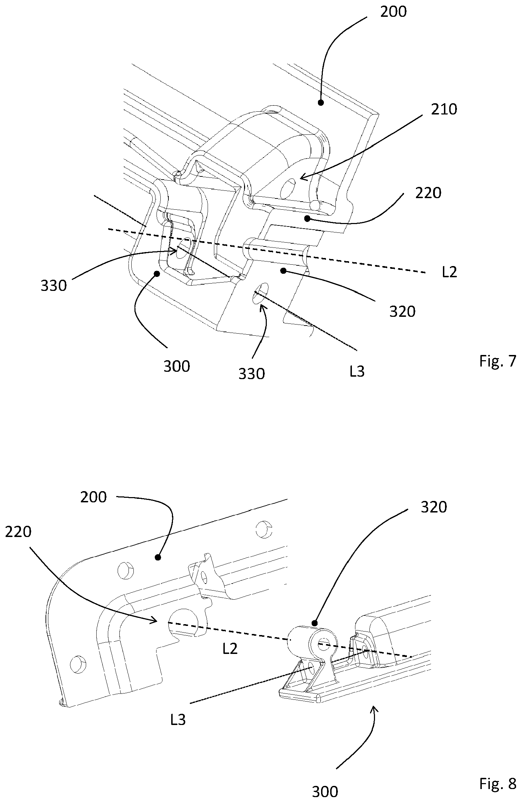

Figur 7 zeigt eine Schrägansicht auf die Tragstruktur 200 mit dem Griffelement 300 ohne Klinke 400, entlang eines Querschnitts durch die Gleitlagerbuchse 220 / den Gleitlagerbolzen 320 entlang deren Verschiebungsachse. Diese ist in Figur 7 und 8 mit L2 markiert. Der Gleitlagerbolzen 320 ist vollständig in die Gleitlagerbuchse 220 eingeschoben. Deutlich erkennbar ist die Anordnung der Aufnahmen 330 entlang der Achse L3, die die Lage des vorgesehenen Aktivierungsbolzens 510 beschreibt. Wie aus der Zeichnung ersichtlich, liegen L2 und L3 im Raum rechtwinklig zueinander. Referenzzeichen 210 verweist auf das Drehlager 210 für die (weggelassene) Klinke 400. Figur 8 zeigt die Elemente aus Figur 7 im explodierten Zustand; die Achse L2 von Gleitlagerbuchse 220 und Gleitlagerbolzen 320 ist markiert, ebenso die senkrecht dazu angeordnete Achse L3.

## Patentansprüche

1. Sperrvorrichtung (100) für eine Klappe bzw. eine Türe umfassend
eine im Wesentlichen flächige Tragstruktur (200),
ein Griffelement (300) zum Entriegeln der Sperrvorrichtung; sowie
eine Klinke (400) mit einem Haken (410); wobei:
die Tragstruktur (200) mit der Klappe kraftschlüssig verbunden werden kann und
- ein Drehlager (210) für einen Rotationsbolzen (500); sowie
- mindestens eine zylinderförmige geradführende Gleitlagerbuchse (220) aufweist;
das Griffelement (300)
- eine Griffmulde (310) und mindestens einen Gleitlagerbolzen (320) aufweist und
- eine Aufnahme (330) für einen ortsfest im Griffelement (300) angeordneten, rechtwinklig zum Gleitlagerbolzen ausgerichteten Aktivierungsbolzen (510) bietet;
die Klinke (400)
- eine als Langloch oder Nut ausgeführte Kulisse (420) aufweist zur Führung des Aktivierungsbolzens (510);
wobei in einem vormontierten Zustand
- der Gleitlagerbolzen (320) des Griffelements (300) in der Gleitlagerbuchse (220) der Tragstruktur (200) längsverschieblich geführt ist;
- die Klinke (400) im Drehlager (210) der Tragstruktur (200) um den Rotationsbolzen (500) drehbar gelagert ist zwischen einer Position "verriegelt" und "offen"; und
- der Aktivierungsbolzen (510) sich im Eingriff mit der Kulisse (420) befindet
**dadurch gekennzeichnet, dass**
die Führung des Griffelements (300) beim Öffnen und Schliessen durch die Kombination Gleitlagerbolzen (320) / Gleitlagerbuchse (220) geradlinig erfolgt und diese Gerad-Bewegung durch den mitbewegten Aktivierungsbolzen (510) über die Kulisse (420) in eine Drehbewegung der Klinke (400) übersetzt wird, welche die Entriegelung der Sperrvorrichtung bewirkt.

2. Sperrvorrichtung nach Anspruch 1, **dadurch gekennzeichnet, dass** eine Schenkelfeder am Drehlager (210) vorgesehen ist, welche die Klinke (400) in Richtung der Position "verriegelt" drückt.

3. Sperrvorrichtung nach Anspruch 1 -2, **dadurch gekennzeichnet, dass** am Griffelement (300) ein Indikator (340) angebracht ist, der sichtbar ist, wenn die Sperrvorrichtung sich in der einer "Offen" Position befindet und der verdeckt wird, wenn die Sperrvorrichtung sich in der einer "Geschlossen" Position befindet.

4. Sperrvorrichtung nach Anspruch 1 - 3, **dadurch gekennzeichnet, dass** die Kulisse (420) eine erste (421) und eine zweite Endposition (422) besitzt und der Aktivierungsbolzen zwischen der ersten und zweiten Endposition (421, 422) beweglich ist und der Öffnungsvorgang erst durch das kraftschlüssige Anliegen in der ersten Endposition eingeleitet wird.

5. Sperrvorrichtung nach Anspruch 1 - 4, **dadurch gekennzeichnet, dass** beim Schliessvorgang der Haken (410) in einen Gegenhalter einrastet und dadurch über die Kulisse (420) der Aktivierungsbolzen (510) von einer nicht definierten Position in der Kulisse (420) an die erste Endposition (421) gezogen wird und das Griffelement (300) in eine definierte Endposition überführt wird.

6. Schliesseinheit (10) für eine Klappe bzw. eine Türe umfassend zwei Sperrvorrichtungen (100, 100') nach Anspruch 1 - 5 **dadurch gekennzeichnet, dass** die beiden Griffelemente (300, 300') um eine gemeinsame Griffmulde (310) angeordnet sind und eine gemeinsame Tragstruktur (200) vorgesehen wird.

7. Verfahren zum Öffnen einer geschlossenen Klappe mit einer Sperrvorrichtung nach den Ansprüchen 3-5 bzw. einer Schliesseinheit gemäß Anspruch 6 wenn abhängig von den Ansprüchen 3-5, mit folgenden Schritten:
- Betätigen des Griffelementes (300) durch Ziehen an der Griffmulde (310),
- wodurch die Klinke (400) betätigt wird und der Haken (410) seinen Gegenhalter freigibt und
- der Aktivierungsbolzen (510) auf einer undefinierten Position in der Kulisse (420) verbleibt und
- der Indikator (340) sichtbar wird.

8. Verfahren zum Schliessen einer geöffneten Klappe mit einer Sperrvorrichtung nach den Ansprüchen 3-5 bzw. einer Schliesseinheit gemäß Anspruch 6 wenn abhängig von den Ansprüchen 3-5, mit folgenden Schritten:
- Drücken der Klappe in Schliessrichtung an der Klappe selbst oder an der Sperrvorrichtung / Schliesseinheit,
- Bis der Haken (410) an einen Gegenhalter anschlägt und durch die weitere Drehbewegung um das Drehlager (210) in den Gegenhalter einrastet,
- Wobei durch die Einrastbewegung gleichzeitig der Aktivierungsbolzen (510) das Grifffelement (300) in eine definierte "Geschlossen" Position zwingt und
- der Indikator (340) verdeckt wird.

9. Verwendung einer Sperrvorrichtung nach Anspruch 1 bis 5 bzw. einer Schliesseinheit nach Anspruch 6 für eine Klappe bzw. eine Türe in einem Gepäckfach in einem Flugzeug.

## Claims

1. Locking device (100) for a flap or a door, comprising a substantially flat support structure (200), a handle element (300) for unlocking the locking device; and a latch (400) with a hook (410); wherein:
the support structure (200) can be non-positively connected to the flap and has
- a pivot bearing (210) for a rotation bolt (500); and
- at least one cylindrical straight-guiding plain bearing bush (220);
the handle element (300) has
- a handle recess (310) and at least one plain bearing bolt (320) and
- provides a receptacle (330) for an activation bolt (510) arranged in a fixed position in the handle element (300) and aligned at right angles to the plain bearing bolt;
the latch (400) has
- a slotted link (420) designed as an elongated hole or groove for guiding the activation bolt (510);
wherein, in a pre-assembled state,
- the plain bearing bolt (320) of the handle element (300) is guided in a longitudinally displaceable manner in the plain bearing bush (220) of the support structure (200);
- the latch (400) is rotatably mounted in the pivot bearing (210) of the support structure (200) about the rotation bolt (500) between a "locked" and "open" position; and
- the activation bolt (510) is in engagement with the slotted link (420),
**characterized in that**
the guidance of the handle element (30) is carried out in a straight line during opening and closing by the combination of plain bearing bolt (320)/plain bearing bush (220) and this straight-line movement is translated by the co-moved activation bolt (510) via the slotted link (420) into a rotary movement of the latch (400), which causes the unlocking of the locking device.

2. Locking device according to claim 1, **characterized in that** a torsion spring is provided on the pivot bearing (210), which presses the latch (400) in the direction of the "locked" position.

3. Locking device according to claim 1-2, **characterized in that** an indicator (340) is attached to the handle element (300), which is visible when the locking device is in an "open" position and which is concealed when the locking device is in a "closed" position.

4. Locking device according to claim 1-3, **characterized in that** the slotted link (420) has a first (421) and a second end position (422) and the activation bolt is movable between the first and second end positions (421, 422) and the opening process is only initiated by the force-locking contact in the first end position.

5. Locking device according to claim 1-4, **characterized in that** during the closing process the hook (410) engages in a counterholder and the activation bolt (510) is thereby pulled from an undefined position in the slotted link (420) to the first end position (421) via the slotted link (420) and the handle element (300) is transferred to a defined end position.

6. Closing unit (10) for a flap or a door comprising two locking devices (100, 100') according to claim 1-5, **characterized in that** the two handle elements (300, 300') are arranged around a common handle recess (310) and a common support structure (200) is provided.

7. Method for opening a closed flap with a locking device according to claims 3-5 or a closing unit according to claim 6 if dependent on claims 3-5, comprising the following steps of
- actuating the handle element (300) by pulling on the handle recess (310),
- whereby the latch (400) is actuated and the hook (410) releases its counterholder and
- the activation bolt (510) remains in an undefined position in the slotted link (420) and
- the indicator (340) becomes visible.

8. Method for closing an open flap with a locking device according to claims 3-5 or a closing unit according to claim 6 if dependent on claims 3-5,
comprising the following steps of
- pressing the flap in the closing direction on the flap itself or on the locking device/closing unit,
- until the hook (410) strikes against a counterholder and engages in the counterholder as a result of the further rotary movement about the pivot bearing (210),
- wherein the engagement movement simultaneously forces the activation bolt (510) to move the handle element (300) into a defined "closed" position and
- the indicator (340) is covered.

9. Use of a locking device according to claim 1 to 5 or a closing unit according to claim 6 for a flap or a door in a luggage compartment in an aircraft.

## Revendications

1. Dispositif de verrouillage (100) pour un volet ou une porte comprenant un structure portante (200) sensiblement plane,
un élément formant poignée (300) pour déverrouiller le dispositif de verrouillage et un loquet (400) avec un crochet (410), dans lequel :
la structure portante (200) peut être reliée par friction au volet et comporte
- un palier de rotation (210) pour un boulon rotatif (500) et
- au moins un coussinet lisse (220) cylindrique et rectiligne,
l'élément formant poignée (300) comporte
- un creux de poignée (310) et au moins un boulon de palier lisse (320) et offre
- un logement (330) pour un boulon d'activation (510) disposé à demeure dans l'élément formant poignée (300) et orienté perpendiculairement au boulon de palier lisse ;
le loquet (400) comporte
- une glissière (420) conformée comme un trou oblong ou une rainure pour guider le boulon d'activation (510),
- le boulon de palier lisse (320) de l'élément formant poignée (300) étant guidé en translation longitudinale dans le coussinet lisse (220) de la structure portante (200),
- le loquet (400) étant supporté avec possibilité de rotation autour du boulon rotatif (500) dans le palier de rotation (210) de la structure portante (200) entre une position verrouillée et une position ouverte et
- le boulon d'activation (510) se trouvant en prise avec la glissière (420)
dans un état préassemblé,
**caractérisé en ce que**
le guidage de l'élément formant poignée (300) lors de l'ouverture et de la fermeture est réalisé en ligne droite par la combinaison du boulon de palier lisse (320) et du coussinet lisse (220) et ce mouvement rectiligne est transformé en mouvement de rotation du loquet (400) par le boulon d'activation (510) entraîné en même temps par l'intermédiaire de la glissière (420), qui réalise le déverrouillage du dispositif de verrouillage.

2. Dispositif de verrouillage selon la revendication 1, **caractérisé en ce qu'**est prévu sur le palier de rotation (210) un ressort à bras qui presse le loquet (400) en direction de la position verrouillée.

3. Dispositif de verrouillage selon la revendication 1-2, **caractérisé en ce qu'**est monté sur l'élément formant poignée (300) un témoin (340) qui est visible quand le dispositif de verrouillage se trouve dans une position ouverte et qui est escamoté quand le dispositif de verrouillage se trouve dans une position fermée.

4. Dispositif de verrouillage selon la revendication 1-3, **caractérisé en ce que** la glissière (420) possède une première position de fin de course (421) et une deuxième (422) et le boulon d'activation peut se déplacer entre la première position de fin de course et la deuxième (421, 422) et l'opération d'ouverture n'est engagée que par l'appui par friction dans la première position de fin de course.

5. Dispositif de verrouillage selon la revendication 1-4, **caractérisé en ce que**, lors de la fermeture, le crochet (410) s'enclenche dans un contre-appui et le boulon d'activation (510) est ainsi tiré sur la glissière (420) d'une position non définie dans la glissière (420) vers la première position de fin de course (421) et l'élément formant poignée (300) est déplacé dans une position de fin de course définie.

6. Unité de fermeture (10) pour un volet ou une porte comprenant deux dispositifs de verrouillage (100, 100') selon la revendication 1-5 **caractérisé en ce que** les deux éléments formant poignée (300, 300') sont disposés autour d'un creux de poignée (310) commun et une structure portante (200) commune est prévue.

7. Procédé pour ouvrir un volet fermé avec un dispositif de verrouillage selon les revendications 3-5 ou une unité de fermeture selon la revendication 6 lorsque celle-ci est dépendante des revendications 3-5, comprenant les étapes suivantes :
- actionnement de l'élément formant poignée (300) par une traction sur le creux de poignée (310),
- de sorte que le loquet (400) est actionné et le crochet (410) libère son contre-appui et
- le boulon d'activation (510) reste dans une position indéfinie dans la glissière (420) et
- le témoin (340) devient visible.

8. Procédé pour fermer un volet ouvert avec un dispositif de verrouillage selon les revendications 3-5 ou une unité de fermeture selon la revendication 6 lorsque celle-ci est dépendante des revendications 3-5, comprenant les étapes suivantes :
- poussée dans le sens de la fermeture du volet sur le volet lui-même ou sur le dispositif de verrouillage/l'unité de fermeture
- jusqu'à ce que le crochet (410) bute sur un contre-appui et s'enclenche dans le contre-appui quand le mouvement de rotation autour du palier de rotation (210) continue,
- le mouvement d'enclenchement conduisant en même temps le boulon d'activation (510) à contraindre l'élément formant poignée (300) dans une position fermée définie et
- le témoin (340) est escamoté.

9. Utilisation d'un dispositif de verrouillage selon la revendication 1 à 5 ou d'une unité de fermeture selon la revendication 6 pour un volet ou une porte dans un compartiment à bagages d'un avion.
